# EUROPÄISCHE PATENTSCHRIFT

(11) **EP 0 998 681 B1**
(45) Veröffentlichungstag und Bekanntmachung des Hinweises auf die Patenterteilung: **25.09.2002**
(21) Anmeldenummer: 98942524.4
(22) Anmeldetag: 08.07.1998
(51) Int. Cl.: G01S 5/14

(54) **SATELLITEN-NAVIGATIONSVERFAHREN**
SATELLITE NAVIGATION
NAVIGATION PAR SATELLITE

(30) Priorität: 19.07.1997 DE 19731109
(43) Veröffentlichungstag der Anmeldung: 10.05.2000
(73) Patentinhaber: HONEYWELL AG, 63067 Offenbach am Main (DE)
(72) Erfinder: GU, Xiaogang, D-89155 Erbach (DE); LEIPRECHT, Ansgar, D-89081 Ermingen (DE)
(74) Vertreter: Keil, Rainer A., Dipl.-Phys. Dr.
(86) Internationale Anmeldenummer: EP9804231
(87) Internationale Veröffentlichungsnummer: WO99004281

(56) Entgegenhaltungen:
- EP-A- 0 588 598
- EP-A- 0 609 935
- WO-A-95/27909
- US-A- 5 450 448
- TIEMEYER B ET AL: "SATELLITE NAVIGATION FOR HIGH PRECISION AIRCRAFT NAVIGATION WITH EMPHASIS ON ATMOSPHERIC EFFECTS" POSITION LOCATION AND NAVIGATION SYMPOSIUM (PLANS), LAS VEGAS, APR. 11 - 15, 1994, 11. April 1994, Seiten 394-401, XP000489370 INSTITUTE OF ELECTRICAL AND ELECTRONICS ENGINEERS
- CHAFFEE J W ET AL: "THE GPS FILTERING PROBLEM" 500 YEARS AFTER COLUMBUS - NAVIGATION CHALLENGES OF TOMORROW, MONTEREY, CA., MAR. 23 - 27, 1992,1. Januar 1992, Seiten 12-20, XP000344281 INSTITUTE OF ELECTRICAL AND ELECTRONICS ENGINEERS

## Beschreibung

Die Erfindung geht aus von einem Satelliten-Navigationsverfahren nach dem Oberbegriff des Patentanspruchs 1. Ein solches Verfahren ist z.B. aus EP 609 935 bekannt.

Die Erfindung ist insbesondere anwendbar auf die Navigation mittels GPS-Satelliten (Global Positioning System). Für eine Navigation im dreidimensionalen Raum benötigt ein (Satelliten-)Empfänger, dessen geographische Position ermittelt werden soll, immer gleichzeitig mindestens vier verschiedene Satelliten-Verbindungen (SV). Bei der Navigation werden die Entfernungen zwischen der Empfangsantenne (Empfängerantenne) des Empfängers zu drei verschiedenen, gleichzeitig empfangbaren Satelliten gemessen, deren Positionen bekannt sind. Der gleichzeitige Empfang der Signale eines vierten Satelliten wird für die Zeitsynchronisation des Empfängers mit der Systemzeit der Satelliten benötigt.

Dadurch ist die Position der Empfängerantenne im dreidimensionalen Raum bestimmt.

Da von GPS-Satelliten codierte Signale ausgesandt werden, kann von einem Empfänger eine Entfernungsmessung auf unterschiedliche Weise durchgeführt werden, nämlich
- durch Auswertung der empfangenen Code-Signale (Code-Messungen) oder
- durch Auswertung der Trägerphasen (Trägerphasen-Messungen).

Es können bei diesen Messungen zwischen Empfängern korrelierte Fehler entstehen, welche beispielsweise auf Satellitenuhrenfehlern und Änderungen in der Tropos- und Ionosphäre beruhen. Diese Fehler werden als Korrekturen (Korrekturwerte) für die Mobilstation ermittelt. Bei der Differentialarbeitsweise (DGPS) von GPS kann eine Entfernungskorrektur in einer Referenzstation ermittelt werden aus dem Vergleich einer Pseudo-Entfernung für die Referenzstation (durch Satelliten-Navigation ermittelte Entfernung zwischen der Referenzstation und einem empfangbaren Satelliten) mit einer bekannten geometrischen Entfernung zwischen der Referenzstation und dem empfangenen Satelliten. Die Pseudo-Entfernungsmessungen der Mobilstation werden mit den Entfernungskorrekturen korrigiert, die von der Referenzstation per (Daten-)Funk übertragen werden.

Es können jedoch auch unkorrelierte Fehler zwischen Empfängern auftreten, beispielsweise infolge der Einflüsse der Mehrwegausbreitungen der Signale zwischen Empfängern. Diese Fehler sollten möglichst unterdrückt werden, da sie durch die Differentialkorrektur nicht verringert werden können. Zur Verringerung der Einflüsse der unkorrelierten Fehler wird die Trägerphasenmeßgröße verwendet, deren Meßrauschen und Mehrwegausbreitungseinflüsse im Millimeter- oder Zentimeterbereich liegen. Es ergibt sich aus der Trägerphasenmessung jedoch in störender Weise eine Mehrdeutigkeit in der Anzahl der Wellenlängen, da sich die Messung der Trägerphase in einer Phase-Lock-Loop (PLL) - Meßanordnung durch eine Verschiebung um eine beliebige ganze Anzahl der Phasenzyklen nicht ändert. Eine bekannte Technik, sogenannte "carrier smoothed code", kombiniert die Code- mit den Trägerphasengrößen und unterdrückt damit Meßrauschen und Mehrwegausbreitungseinflüsse bei der Codemessung. Hierbei wird über die Trägerphasenmessung die Doppler-Verschiebung beziehungsweise die Entfernungsänderung vom Satelliten zum Empfänger zwischen zwei Zeitpunkten bestimmt und über eine phasengeglättete Codemessung die Phasenmehrdeutigkeiten näherungsweise ermittelt. Die Zeitkonstante des Filters bei der derzeitigen Technik mit dem Carrier-Smoothed-Code wird durch den Ionosphärenfehler begrenzt, da sich dieser bei der Code- und der Trägerphasenmessung gegenläufig verhält. Bei der Differentialarbeitsweise mit Carrier-Smoothed-Code kann eine große Filterzeitkonstante die unkorrelierten Fehler zwischen der Referenz- und der Mobilstation verringern. Eine große Filterzeitkonstante verzerrt jedoch in nachteiliger Weise auch den an sich korrigierbaren lonosphärenfehler in der Differentialkorrektur, so daß der lonosphärenfehler an der Mobilstation nicht vollkommen kompensiert werden kann. Mit einem derartigen Verfahren, das als DGPS-Navigationsverfahren bekannt ist, kann bei der Positionsbestimmung des Empfängers eine Genauigkeit von ungefähr ± 2 m bis ± 3 m (95%) erreicht werden. Diese Genauigkeit ist für einige Anwendungsfälle, beispielsweise bei der Navigation während eines Landeanflugs eines Verkehrsflugzeugs nicht ausreichend, insbesondere dann nicht, wenn dieser Landeanflug nach sogenannten CAT IIIb-Bedingungen, d.h. bei einer Sichtweite "Null", durchgeführt werden soll.

Der Erfindung liegt die Aufgabe zugrunde, ein gattungsgemäβes Verfahren anzugeben, mit dem eine zuverlässige und genaue Navigation möglich wird, insbesondere während eines Landeanflugs eines Flugzeugs.

Diese Aufgabe wird gelöst durch die im kennzeichnenden Teil des Patentanspruchs 1 angegebenen Merkmale. Vorteilhafte Ausgestaltungen und/oder Weiterbildungen sind den weiteren Ansprüchen entnehmbar.

Ein erster Vorteil der Erfindung besteht darin, daß eine genaue und schnelle Positionsbestimmung möglich wird, so daß insbesondere eine vollständige Landung eines Verkehrsflugzeugs vollautomatisch durchgeführt werden kann. Während des Landeanflugs ist es in zuverlässiger Weise möglich, die Position und die Geschwindigkeit auch unter möglichen Einflüssen langwelliger Mehrwegausbreitungen genau zu bestimmen, so daß höhere Genauigkeiten erreichbar sind als in den erwähnten CAT IIIb-Bedingungen.

Ein zweiter Vorteil besteht darin, daß das Verfahren an der Referenzstation nahezu unabhängig ist von dem Typ des (mobilen) Empfängers und der darin vorhandenen Auswertung der empfangenen GPS-Satellitensignale.

Weitere Vorteile ergeben sich aus der nachfolgenden Beschreibung.

Die Erfindung wird im folgenden anhand von Ausführungsbeispielen näher erläutert, die auf der GPS-Satellitennavigation beruhen.

Die Erfindung geht aus von der Kenntnis, daß die derzeitigen Standards, beispielsweise entsprechend RCTM-104, RCTA-DO-217(SCATI), für Differentialkorrekturen in der GPS-Navigation vorsehen, daß für die zwischen einer (mobilen) Empfangsantenne (mit angeschlossenem Empfänger) und einem vorgebbaren GPS-Satelliten gemessene Entfernung (oder damit zusammenhängende Meßgrößen, wie beispielsweise Pseudo-Range, Doppler, Delta-Range, Range-Rate) von einer ortsfesten Referenzstation (mit bekanntem Ort) die Differentialkorrekturen ermittelt werden. Sofern in der Referenzstation sowie mindestens einem (mobilen) Empfänger eines navigierenden Objekts (z.B. Flugzeug) mehrere der genannten Meßgrößen gleichzeitig ermittelt werden, verwenden die genannten Standards, welche die Korrekturwerte, beispielsweise entsprechend dem Datalink-Typ 1 von RTCA-DO-217/RTCM-104, an den (mobilen) Empfänger übertragen, dafür unterschiedliche Verfahren. Der Typ 1 ermöglicht entweder eine sogenannte Code-Differentialkorrektur oder, zur Erhöhung der Genauigkeit, einen einzigen Differential-Korrekturwert für den sogenannten "Carrier Phase Smoothed Range".

Bei der Erfindung werden die aus einer Codemessung der Referenzstation ermittelten ungefilterten Pseudo-Entfernungen zwischen der Referenzstation und empfangbaren Satelliten verglichen mit den mittels Bahnparametern ermittelten zugehörigen geometrischen Entfernungen. Daraus werden die Code-Range-Differentialkorrekturen berechnet, beispielsweise zeitlich periodisch in vorgebbaren Zeitabständen (Zeitschritten). Es wird also vorteilhafterweise kein Filter mit einer möglicherweise zu kleinen oder zu großen Zeitkonstante verwendet. Zeitlich parallel dazu werden die aus der Trägerphasenmessung der Referenzstation ermittelten Entfernungsänderungen (Integrierte Dopplerverschiebungen) mit den mittels Bahnparametern ermittelten geometrischen Entfernungsänderungen verglichen und daraus die Trägerphasen-Range-Differentialkorrekturen zu denselben Zeitschritten der Code-Range- Differentialkorrekturen ermittelt.

Diese beiden Differentialkorrekturen werden entweder direkt von der Referenzstation an die Mobilstation übermittelt, beispielsweise mittels einer im Flugverkehr derzeit üblichen Datenfunkstrecke. Alternativ dazu ist es möglich, die von der Referenzstation ermittelten Rohmeßdaten, beispielsweise Code-Pseudoranges sowie Trägerphasen, unmittelbar an die Mobilstation zu übermitteln und an Bord der Mobilstation dann daraus die Differentialkorrekturen zu berechnen.

Die ungefilterten Code-Pseudoranges und die aus Trägerphasen ermittelten Integrierten Dopplerverschiebungen werden getrennt mit den entsprechenden Differentialkorrekturen der Referenzstation korrigiert. Die Kombination von Code- und Trägerphasenmessungen, der sogenannte "carrier smoothed code", erfolgt erst nach der Anwendung der Differentialkorrekturen. Durch diese getrennte Differentialkorrektur wird der Ionosphärenfehler (bei dem sogenannten Local Area DGPS) weitgehend durch die getrennt korrigierten Code- und Trägerphasengrößen für die Mobilstation eliminiert.

Es ist ersichtlich, daß durch das beschriebene Verfahren für eine getrennte Differentialkorrektur in vorteilhafter Weise eine optimale Fehlerkompensation ermöglicht wird.

Bei den verbleibenden (nicht Common-Mode-)Fehlern läßt sich deren zeitlich veränderliche Anteil vorteilhafterweise durch eine Tiefpaßfilterung mit einer großen Zeitkonstanten, die beispielsweise empirisch ermittelt wird, unterdrücken, so daß auch langsam veränderliche Fehler, beispielsweise Multipath-Fehler (Mehrwegfehler), bis auf einen vernachlässigbaren Wert reduziert werden, ohne mögliche Ionosphärenfehler (sogenannte Common-mode-Fehler) bei der Differentialkorrektur derart zu verzerren, daß diese nicht kompensierbar sind.

Die mit diesem Verfahren ermittelten Differentialkorrekturen werden vorzugsweise über eine Datenfunkstrecke an ein navigierendes Objekt, beispielsweise ein im Landeanflug befindliches Flugzeug, übertragen. Dort werden die jeweiligen Meßgrößen einzeln differential kompensiert (korrigiert). Dabei gibt es drei Fälle:
1. Im navigierenden Objekt wird nur Code-Range (Entfernung aus den GPS-Code-Signalen) gemessen und entsprechend der von der Referenzstation übermittelten zugehörigen ungefilterten Code-Differentialkorrektur kompensiert (korrigiert).
2. Im navigierenden Objekt wird nur Phase-Carrier-Range (Entfernung aus Trägerphasenmessung der GPS-Signale) gemessen und entsprechend der von der Referenzstation übermittelten zugehörigen Phasen-Differentialkorrektur kompensiert (korrigiert).
3. Im navigierenden Objekt werden Code- und Carrier-Phase-Range gemessen und entsprechend den übermittelten zugehörigen Code- sowie Phase-Differentialkorrekturen kompensiert (korrigiert).

Aus den derart einzeln kompensierten Meßgrößen wird anschließend in der Mobilstation eine phasengeglättete Code-Entfernung für jeden empfangbaren Satelliten gebildet. Dabei wird vorzugsweise eine Tiefpaßfilterung mit großer Tiefpaßzeitkonstante durchgeführt, um - wie beschrieben - die durch langsam veränderliche Fehler (Mehrwegausbreitungen) erzeugten Fehlereinflüsse auf einen vernachlässigbaren Wert zu verringern.

Die Erfindung ist nicht auf die beschriebenen Beispiele beschränkt, sondern sinngemäß auf weitere anwendbar. Beispielsweise ist eine hochgenaue GPS-Satelliten-Schiffnavigation möglich, beispielsweise bei Anlegemanövern.

## Patentansprüche

1. Satelliten-Navigationsverfahren, wobei für ein navigierendes Objekt, dessen Position bestimmt wird aus den empfangenen Signalen mehrerer Satelliten (Satelliten-Navigation),
- mit einer Referenzstation, die eine bekannte Antennenposition ihrer Satelliten-Empfangsanlage hat, die Differentialkorrekturen für einzelne Satelliten ermittelt werden aus dem Vergleich der gemessenen Entfernungsgröβen mit den anhand der bekannten Referenzposition errechneten geometrischen Entfernungsgrößen,
- die Differentialkorrekturen entweder direkt an das navigierende Objekt übermittelt oder alternativ durch übermittelte Rohmeßgrößen im navigierenden Objekt ermittelt werden und
- in dem navigierenden Objekt dessen gemessenen Entfernungsgrößen durch die Differentialkorrekturen korrigiert werden, **dadurch gekennzeichnet,**
- **daß** für die Referenzstation aus Code- und Trägerphasenmessungen jeweils zugehörige Entfernungsgrößen ermittelt werden,
- **daß** die Differentialkorrekturen der ungefilterten Code-Pseudoentfernungen und die Differentialkorrekturen der integrierten Phasen-Dopplerverschiebungen einzeln ermittelt werden aus dem Vergleich der gemessenen Entfernungsgrößen mit den anhand der bekannten Referenzposition errechneten geometrischen Entfernungsgrößen,
- **daß** für das navigierende Objekt dessen ungefilterte Code-Pseudoranges und dessen aus Trägerphasen ermittelte Integrierten Dopplerverschiebungen mit zugehörigen Code- und Phasen-Differentialkorrekturen einzeln korrigiert werden und
- **daß** nach dieser Korrektur die einzeln, differential korrigierten Meßgrößen des navigierenden Objekts durch eine Filterung zu an sich bekannten "carrier smoothed codes" kombiniert werden.

2. Satelliten-Navigation nach Anspruch 1, **dadurch gekennzeichnet, daß** für die Satelliten-Navigation in dem navigierenden Objekt sowie in der Referenzstation die Satelliten-Signale von GPS-Satelliten ausgewertet werden.

3. Satelliten-Navigation nach einem der vorhergehenden Ansprüche zur Verwendung für die Positionsbestimmung eines Luftfahrzeugs als navigierendes Objekt.

4. Satelliten-Navigation nach einem der vorhergehenden Ansprüche zur Verwendung als Landehilfe bei einem Luftfahrzeug.

## Claims

1. Satellite navigation method, corresponding to which for a navigating object, the position of which is determined by signals received by several satellites (satellite navigation),
- the differential corrections for the individual satellites are determined with a reference station having a known antenna position of its satellite receiver by comparison of the measured distance values with the geometrical distance values calculated on the basis of the known reference position,
- the differential corrections are either transmitted directly to the navigating object or, alternatively, determined in the navigating object using transmitted rough measured values and
- in the navigating object its measured distance values are corrected by the differential corrections, **characterized in that**
- for the reference station corresponding distance values are determined by code-and carrier-phase-measurements,
- that the differential corrections of the unfiltered code pseudo distances and the differential corrections of the integrated phase Doppler-shifts are determined individually by comparison of the measured distance values with the geometric distance values calculated on the basis of the known reference position,
- that for the navigating object its unfiltered code pseudo ranges and its integrated Doppler-shifts determined from carrier phases including corresponding code-and phase differential corrections are corrected individually and
- that after this correction the individually, differentially corrected measured values of the navigating object are combined to such known "carrier smoothed codes" by a filtering.

2. Satellite navigation according to claim 1, **characterized in that** for the satellite navigation in the navigating object as well as in the reference station the satellite signals are analyzed by GPS satellites.

3. Satellite navigation according to one of the preceding claims for use for the position determination of an aircraft as a navigating object.

4. Satellite navigation according to one of the preceding claims for use as landing device for an aircraft.

## Revendications

1. Procédé de navigation par satellite, avec lequel pour un objet naviguant dont la position est déterminée à partir des signaux reçus de plusieurs satellites (navigation par satellite),
• les corrections différentielles pour chaque satellite sont déterminées en comparant les distances mesurées avec les distances géométriques déterminées au moyen de la position de référence connue à l'aide d'une station de référence dont la position de l'antenne de l'installation de réception par satellite est connue,
• les corrections différentielles sont soit transmises directement à l'objet naviguant soit, comme autre possibilité, déterminées dans l'objet naviguant à l'aide des grandeurs mesurées brutes et
• les distances mesurées par l'objet naviguant sont corrigées avec les corrections différentielles, **caractérisé en ce que**
• les distances respectives pour chaque station de référence sont déterminées à partir des mesures de code et des mesures de la phase de la porteuse,
• **en ce que** les corrections différentielles des pseudo-distances de code non filtrées et les corrections différentielles des décalages de phases Doppler intégrées sont déterminées séparément en comparant les s distances mesurées avec les distances géométriques calculées à l'aide de la position de référence connue,
• **en ce que** pour l'objet naviguant le pseudo-rang de code non filtré et les décalages Doppler intégrés déterminés à l'aide des phases de la porteuse avec les corrections différentielles de code et de phases correspondantes sont corrigés séparément et
• **en ce qu'**après cette correction, chaque grandeur de mesure différentielle corrigée de l'objet naviguant est combinée par filtrage en des "carrier smoothed codes" en soi connus.

2. Navigation par satellite selon la revendication 1, **caractérisée en ce que** des signaux de satellite GPS sont analysés pour la navigation par satellite dans l'objet naviguant ainsi que dans la station de référence.

3. Navigation par satellite selon l'une des revendications précédentes destinée à être utilisée pour la détermination de la position d'un aéronef comme l'objet naviguant.

4. Navigation par satellite selon l'une des revendications précédentes pour l'utilisation comme aide à l'atterrissage sur un aéronef.
